(19)

**Europäisches Patentamt**

**European Patent Office**

**Office européen des brevets**

(11) **EP 4 227 689 B1**

(12) **EUROPÄISCHE PATENTSCHRIFT**

(45) Veröffentlichungstag und Bekanntmachung des Hinweises auf die Patenterteilung:
**26.06.2024 Patentblatt 2024/26**

(21) Anmeldenummer: **23156108.5**

(22) Anmeldetag: **10.02.2023**

(51) Internationale Patentklassifikation (IPC):
**G01P 5/14** *(2006.01)* **B64D 43/02** *(2006.01)*
**G01P 13/02** *(2006.01)* *G01P 21/02* *(2006.01)*

(52) Gemeinsame Patentklassifikation (CPC):
**G01P 13/025; B64D 43/02; G01P 5/14;**
G01P 21/025

(54) **VERFAHREN ZUR BESTIMMUNG VON ANSTRÖMPARAMETERN EINES ÜBERSCHALL-FLUGKÖRPERS**

METHOD FOR DETERMINING FLOW PARAMETERS OF A SUPERSONIC MISSILE

PROCÉDÉ DE DÉTERMINATION DE PARAMÈTRES D'ENTRÉE D'UN CORPS VOLANT SUPERSONIQUE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **14.02.2022 DE 102022103381**

(43) Veröffentlichungstag der Anmeldung:
**16.08.2023 Patentblatt 2023/33**

(73) Patentinhaber: **Deutsches Zentrum für Luft- und Raumfahrt e.V.**
**53227 Bonn (DE)**

(72) Erfinder: **Riehmer, Johannes**
**51069 Köln (DE)**

(74) Vertreter: **REHBERG HÜPPE + PARTNER Patentanwälte PartG mbB**
**Robert-Gernhardt-Platz 1**
**37073 Göttingen (DE)**

(56) Entgegenhaltungen:
**DE-T2- 60 022 396 US-A1- 2016 356 175**
**US-A1- 2020 183 423 US-A1- 2021 072 281**

- **SANKARALINGAM L ET AL: "A comprehensive survey on the methods of angle of attack measurement and estimation in UAVs", CHINESE JOURNAL OF AERONAUTICS, ELSEVIER, AMSTERDAM, NL, Bd. 33, Nr. 3, 18. November 2019 (2019-11-18), Seiten 749-770, XP086138001, ISSN: 1000-9361, DOI: 10.1016/J.CJA.2019.11.003 [gefunden am 2019-11-18]**

**Beschreibung**

## TECHNISCHES GEBIET DER ERFINDUNG

Eine möglichst präzise Bestimmung von Anströmparametern eines Überschall-Flugkörpers (bei dem es sich auch um einen Hyperschall-Flugkörper handeln kann) ist für die Flugsteuerung von Bedeutung. Bei den Anströmparametern handelt es sich insbesondere um den Strömungsvektor (hier durch einen Anstellwinkel $\alpha$ und einen Schiebewinkel $\beta$ oder durch einen Anstellwinkel und einen Rollwinkel beschrieben), eine Geschwindigkeit (hier die dimensionslose Machzahl M) und die statischen Atmosphärenbedingungen (hier der statische Druck $p_\infty$ und die statische Umgebungstemperatur $T_\infty$). Letzteres kann dabei zur Bestimmung der aktuellen Flughöhe benutzt werden.

## STAND DER TECHNIK

Mehrlochsonden, die auch als Staupunktsonden bezeichnet werden, werden im Bereich eines Staupunktes, insbesondere im Bereich einer Stirnfläche einer Nase oder eines Tragflügels, angeordnet. Mittels der Mehrlochsonden werden gleichzeitig mehrere Druckmessungen an der Oberfläche des umströmten Körpers durchgeführt, wobei aus den Druckdifferenzen die Anströmparameter ermittelt werden.

Bekannt sind des Weiteren sogenannte "Vane-Sensoren", die im Folgenden als Windflügel bezeichnet werden und so verschwenkbar an dem Flugkörper angeordnet sind, dass sich die Windflügel mit der Strömungsrichtung ausrichten. Aus dem Schwenkwinkel des Windflügels kann dann der Anstell- und/oder Schiebewinkel ermittelt werden.

Bei sogenannten "Flush Air Data Sensing System" (abgekürzt "FADS") werden im Staupunkt einer Flugzeug-Nase oder eines Tragflügels an unterschiedlichen Positionen die Drücke gemessen. Mittels eines Algorithmus und entsprechenden Kalibrierkorrekturen erfolgt dann ein Rückschluss auf die Bedingungen bei freier Anströmung.

Mittels Anemometer-Booms werden Mehrlochsonden und Vane-Sensoren kombiniert und der Strömungszustand unmittelbar vor einem Flugzeug ermittelt.

Schließlich verwenden sogenannte "Synthetic Air Data Systems" alternative Positionsbestimmungssysteme wie Inertialplattformen und GPS, um einen aktuellen Flugzustand zu bestimmen.

Die Veröffentlichung

Wood, K. T. et al.: "Distributed Pressure Sensing-Based Flight Control for Small Fixed-Wing Unmanned Aerial Systems" Journal of Aircraft, Vol. 56, No. 5, September-Oktober 2019, S. 1951 - S.1960 (https://arc.aiaa.org/doi/pdf/10.2514/1.C035416)

offenbart ein kleines unbemanntes Fluggerät mit zwei Tragflächen, einem Höhenleitwerk und einem Seitenleitwerk, welches für einen Flug in geringer Höhe in städtischen Bereichen und im Bereich von Häuserschluchten bestimmt ist. Die Tragfläche ist mit sechs Drucksensoren auf der Oberseite sowie einem Drucksensor auf der Unterseite ausgestattet. Mittels eines Windflügels wurde zusätzlich der Anstellwinkel gemessen. Aus den Druckmessungen der sieben Drucksensoren wird dann mittels eines neuronalen Netzwerks eine Schätzung für den Anstellwinkel sowie die Luftgeschwindigkeit ermittelt, die dann mit dem Anstellwinkel, der mittels des Windflügels gemessen wird, sowie der Luftgeschwindigkeit, die mittels eines Pitot-Rohrs gemessen wird, verglichen werden.

Die Veröffentlichung

P. J. Hermann et al.: "Airfoil Probe for Angle-of-Attack Measurement", Journal of Aircraft 21.1, January 1984, S. 87 - 89 (https://arc.aiaa.org/doi/10.2514/3.48228)

beschreibt es zunächst als bekannt, einen Anstellwinkel mittels eines Windflügels oder mittels einer Differenzdruckmessung zu messen. Die Veröffentlichung schlägt vor, an einer Tragfläche einen Drucksensor an einer oberen Fläche, einen Drucksensor an einer Stirnfläche sowie einen Drucksensor an einer unteren Fläche vorzusehen, wobei dann aus den Differenzdrücken der Anstellwinkel ermittelt wird.

Die Veröffentlichung

Whitmore, S. et al.: "Application of a Flush Airdata Sensing System to a Wing Leading Edge (LE-FADS)", 31 st Aerospace Sciences Meeting & Exhibit, January 11-14,1993 (https://arc.aiaa.org/doi/pdf/10.2514/6.1993-634)

beschäftigt sich ebenfalls mit der Anordnung mehrerer Drucksensoren an der Oberseite, Unterseite und Stirnseite einer Tragfläche im stromaufwärtigen Endbereich der Tragfläche und der Ermittlung eines Anstellwinkels aus den Druckmessungen.

Die Veröffentlichung

Whitmore, S. et al.: "In-Flight Demonstration of a Real-Time Flush Airdata Sensing (RT-FADS) System", NASA Technical Memorandum 104314, 1995 (https://www.nasa.gov/centers/drydem/pdf/88381main_H-2053.pdf)

schlägt vor, in einer Nase eines Flugkörpers elf Öffnungen vorzusehen, die räumlich über die Nase verteilt angeordnet sind und über Leitungen mit in der Nase angeordneten Drucksensoren verbunden sind. Auf Grundlage der Druckmessungen werden dann der Anstellwinkel und der Schiebewinkel ermittelt. In der Veröffentlichung wird auch der Einfluss von Messfehlern und eines Ausfalls von Sensoren untersucht. Der Auswertung lag ein vereinfachtes aerodynamisches Modell und ein nichtlinearer Algorithmus unter Einsatz der Methode der kleinsten Fehlerquadrate zugrunde.

US 8,930,062 B2 schlägt vor, im Bereich einer konvexen Nase eines Raumfahrzeugs kreuz- oder gitterartig verteilt neun Öffnungen vorzusehen, die über im Inneren der Nase verlaufende Rohrleitungen jeweils mit zugeordneten Sensoreinheiten verbunden sind. In jeder Sensoreinheit wird der Druck an der zugeordneten Öffnung und der Rohrleitung redundant mittels drei Drucksensoren gemessen, so dass insgesamt 27 Drucksensoren vorhanden sind. Die Drucksensoren werden dabei redundant über zugeordnete unabhängige Leistungsversorgungen mit elektrischer Leistung versorgt. Die Messsignale werden ausgewertet, um einerseits ein Verstopfen einer Öffnung und andererseits einen defekten Drucksensor erkennen zu können. Sind die Messwerte von drei Drucksensoren, die einer Öffnung zugeordnet sind, innerhalb einer vorgegebenen Toleranzschwelle gleich, kann darauf geschlossen werden, dass die Drucksensoren ordnungsgemäß arbeiten. Wird hingegen auf diese Weise ein defekter Drucksensor erkannt, wird dieser im Folgenden deaktiviert. Auf diese Weise kann aber nicht detektiert werden, wenn eine Öffnung verstopft ist oder simultan zwei Drucksensoren ausfallen. In einem zweiten Schritt erfolgt ein Vergleich der Messwerte mit erwarteten Messwerten, die a priori, hier in Abhängigkeit der Machzahl des Flugkörpers, bekannt sind. Liegt der Messwert außerhalb eines Toleranzbereichs um den erwarteten Wert, kann darauf geschlossen werden, dass der Drucksensor defekt ist. In einem weiteren Schritt wird innerhalb einer Zeitspanne von 100 Sekunden der höchste und der niedrigste Messwert des Drucksensors ermittelt. Liegt die Differenz des höchsten und niedrigsten Messwerts unterhalb eines vorbestimmten Schwellwerts, werden die Messwerte für die zugeordnete Öffnung im Folgenden nicht weiter berücksichtigt. Diese Prüfung erfolgt aber nur für stationäre Flugbedingungen. Zusätzlich wird innerhalb einer Zeitspanne von 25 Millisekunden geprüft, ob der Messwert des Drucks an einer Öffnung mindestens um einen Schwellwert variiert. Ist dies der Fall, wird ebenfalls der Druck der zugeordneten Öffnung nicht weiter berücksichtigt. Durch die beiden letztgenannten Prüfungen kann eine Verstopfung einer Öffnung detektiert werden. Schließlich werden aus den Messwerten Sätze des Anstellwinkels und des Schiebewinkels ermittelt, wobei der Anstellwinkel und der Schiebewinkel mittels der Drucksensoren auf den unterschiedlichen Ästen des Kreuzes, entlang welchen die Drucksensoren angeordnet sind, ermittelt werden.

Weiterer Stand der Technik ist bekannt aus:

US 7 070 144 B1, wobei in dieser Druckschrift keine Ermittlung globaler Strömungsparameter durch Verknüpfung vieler lokaler Messungen erfolgt, sondern auf Basis lokaler Messungen lokale Strömungsmanipulationen erfolgen,
DE 10 2012 104 366 A1,
US 2012/0 091 266 A1,
Giagkozoglou Vincenzino, S. et al.: Reusable Structures for CALLISTO. In: 8th European Conference for Aeronautics and Space Sciences (EUCASS). 01. - 04. Juli 2019, Madrid, Spanien und
US 2016/0161524 A1.

Aus der US 2020/183423 A1, der Veröffentlichung SANKARALINGAM L ET AL: "A comprehensive survey on the methods of angle of attack measurement and estimation in UAVs",CHINESE JOURNAL OF AERONAUTICS, ELSEVIER, AMSTERDAM, NL, Bd. 33, Nr. 3, 18. November 2019, der US 2021/072281 A1, der US 2016/356175 A1 und der DE 600 22 396 T2 sind Verfahren zur Bestimmung von Anströmparametern von Luftfahrzeugen bekannt. Insbesondere offenbaren die ersten drei Dokumente die Verwendung mehrerer Drucksensoren zur Ermittlung von Schätzungen für Anströmparameter wie Machzahl, Druck, Anstellwinkel und/oder Schiebewinkel. Des weiteren werden dort redundante Messungen mittels der Anzahl an Drucksensoren beschrieben. Aus den letzten beiden Dokumenten ist es bekannt, Druckmessungen mittels Drucksensoren durchzuführen, deren lokaler Anstellwinkel veränderbar ist, um bestimmte Anströmparameter zu bestimmen.

## AUFGABE DER ERFINDUNG

Der Erfindung liegt die Aufgabe zugrunde, ein Verfahren zur Bestimmung von Anströmparametern eines Überschall-Flugkörpers vorzuschlagen, welches insbesondere hinsichtlich

- der Reduzierung der Beeinflussung der Umströmung des Flugkörpers und/oder
- der Wärmebeanspruchung von eingesetzten Sensoren infolge der Umströmung des Flugkörpers und/oder
- der Bereiche des Flugkörpers, im Bereich welcher erforderliche Sensoren angeordnet werden können und/oder
- der Wechselwirkung mit anderen Bauelementen des Flugkörpers wie beispielsweise dem Radom oder einer Nase des Flugkörpers und/oder
- der Ermöglichung einer Ermittlung der Anströmparameter sowohl bei einem Vorwärts- als auch einem Rückwärtsflug des Flugkörpers und/oder
- der Güte der Bestimmung der Anströmparameter und/oder
- des Bau- und/oder Auswerteaufwandes

verbessert ist.

## LÖSUNG

Die Aufgabe der Erfindung wird erfindungsgemäß mit den Merkmalen des unabhängigen Patentanspruchs gelöst. Weitere bevorzugte erfindungsgemäße Ausgestaltungen sind den abhängigen Patentansprüchen zu entnehmen.

## BESCHREIBUNG DER ERFINDUNG

Die Erfindung beruht insbesondere auf der Erkenntnis, dass gemäß dem Stand der Technik die Ermittlung der Anströmparameter des Flugkörpers auf Grundlage von Drucksensoren erfolgt, die in einem Staubereich oder im Bereich einer vorderen Stirnfläche des Flugkörpers, insbesondere der Nase oder dem vorderen Endbereich eines Tragflügels, angeordnet sind. Dies kann nachteilig sein, wenn die Umströmung des Flugkörpers gerade in diesen Bereichen nicht durch Sensoren oder Öffnungen beeinträchtigt werden soll oder in diesem Bereich andere Bauelemente wie ein Radom oder andere in die Nase oder den vorderen Endbereich des Tragflügels integrierte Bauelemente angeordnet sein müssen. Andererseits ist der Einsatz von Verfahren, welche auf Sensoren basieren, die im Bereich einer vorderen Stirnseite der Nase oder einer Stirnfläche eines Tragflügels angeordnet sind, auf eine Ermittlung der Anströmparameter während eines Vorwärtsflugs eingeschränkt. Erfolgt beispielsweise für eine Rakete ein Wiedereintritt in die Atmosphäre mit einem Rückwärtsflug, sind die im Bereich einer Nase oder Stirnfläche angeordneten Sensoren in einem in Flugrichtung abgewandten Totbereich angeordnet, in welchem keine sinnvollen Messungen durchgeführt werden können, so dass für den Rückwärtsflug die herkömmlichen Verfahren ungeeignet sind (und ggf. zusätzliche Sensoren vorzusehen sind, auf Grundlage welcher dann während des Rückwärtsfluges die Bestimmung der Strömungsparameter erfolgen kann).

Erfindungsgemäß wird ein Verfahren vorgeschlagen, mittels dessen N Anströmparameter eines Überschall-Flugkörpers (im Folgenden gemeinsam "Flugkörper") bestimmt werden. Im Folgenden wird dies für $N = 4$ erläutert, wobei es sich in diesem Fall bei den Anströmparametern um

- die Geschwindigkeit, insbesondere die Machzahl M,
- die statische Atmosphärenbedingung, insbesondere der Atmosphärendruck $p_\infty$,
- die Ausrichtung des Fahrzeugs zur Anströmung, insbesondere der (globale) Anstellwinkel $\alpha$ (Nicken) und der (globale) Schiebewinkel $\beta$ (Gieren)

handelt. Die Erfindung umfasst aber auch Verfahren, bei dem nur ein Teil der genannten Anströmparameter ermittelt wird oder zusätzlich zu den genannten Anströmparametern weitere Parameter ermittelt werden können, so dass $N \neq 4$ gelten kann.

In dem erfindungsgemäßen Verfahren finden M Drucksensoren Einsatz, die an dem Überschall-Flugkörper vorgesehen sind. Mittels der M Drucksensoren werden M Druckmessungen gleichzeitig durchgeführt. Abweichend zu dem Stand der Technik sind die Drucksensoren aber nicht im Bereich einer Nase oder einer vorderen Stirnseite des Flugkörpers, insbesondere eines Tragflügels, angeordnet, sondern abseits hiervon. Des Weiteren sind die im Rahmen der Erfindung eingesetzten Drucksensoren so angeordnet, dass diese unterschiedliche Flächennormalen besitzen, also den Druck in unterschiedliche Raumrichtungen messen.

Für die Zahl der erfindungsgemäß eingesetzten Drucksensoren und Druckmessungen gilt, dass $M \geq N$ ist. Für das eingangs genannte Beispiel mit vier Anströmparametern ist somit die Zahl der Drucksensoren und Druckmessungen mindestens vier.

Aus den M Druckmessungen werden dann in dem erfindungsgemäßen Verfahren die N Anströmparameter ermittelt. Hierbei erfolgt die Ermittlung der Anströmparameter unter Verwendung einer Datenbank, einer Formel und/oder eines neuronalen Netzwerks. Hierbei können in der Datenbank beispielsweise in der Art eines Kennfeldes oder von Datenfeldern für unterschiedliche Vektoren der Anströmparameter zugeordnete Druckwerte abgespeichert sein, welche sich aus den Druckmessungen für diese Anströmparameter ergeben. Dieses Kennfeld oder die Datenfelder kann/können beispielsweise auf Grundlage von Simulationen oder Tests in einem Windkanal ermittelt worden sein. Möglich ist auch, dass die Abhängigkeiten in einem Testflug ermittelt werden, in welchem einerseits die Druckmessungen mit den Drucksensoren erfolgen, die auch später außerhalb des Testfluges zur Identifikation der Strömungsparameter verwendet werden sollen, und andererseits die Ermittlung der Anströmparameter auf herkömmliche Weise erfolgt, wozu die Sensoren für die herkömmliche Ermittlung zusätzlich bei dem Testflug in dem Test-Flugkörper vorhanden sind, die dann aber später außerhalb des Testfluges in dem dann modifizierten Flugkörper nicht mehr erforderlich sind. In der Auswertung wird dann geprüft, welcher Vektor der Druckwerte am besten zu den Vektoren in der Datenbank passt, womit dann die diesem Vektor in der Datenbank zugeordneten Strömungsparameter als Ergebnis verwendet werden können. Hierzu kann bspw. die Methode der kleinsten Fehlerquadrate verwendet werden. Es kann auch eine Interpolation zwischen mehreren Vektoren mit Druckwerten und den zugeordneten Strömungsparametern erfolgen. Eine etwaig eingesetzte Formel kann die physikalischen Gesetzmäßigkeiten zwischen den Druckmessungen und den Anströmparametern abbilden oder approximieren, wobei unter Umständen für unterschiedliche Flugbedingungen des Flugkörpers unterschiedliche Formeln Einsatz finden können. Ein etwaiges für die Auswertung eingesetztes neuronales Netzwerk bildet ebenfalls die Abhängigkeit der Druckmessungen einerseits und der Anströmparameter andererseits in geeigneter Form ab.

Grundsätzlich können die Drucksensoren an beliebigen Orten des Flugkörpers angeordnet sein, so lange diese unterschiedliche Flächennormalen besitzen und abseits einer Nase oder vorderen Stirnseite des Flugkörpers angeordnet sind. Für einen besonderen Vorschlag der Erfindung sind Drucksensoren an unterschiedlichen Komponenten des Überschall-Flugkörpers angeordnet. Bei diesen unterschiedlichen Komponenten kann es sich beispielsweise um einen Grundkörper oder Rumpfs des Flugkörpers und/oder unterschiedliche Finnen des Flugkörpers handeln. So können beispielsweise mehrere Finnen des Flugkörpers (insbesondere jeweils zwei) Drucksensoren aufweisen. Möglich ist alternativ oder kumulativ, dass Drucksensoren an einer Finne des Flugkörpers angeordnet sind, während andere Drucksensoren an einem Grundkörper oder Rumpf des Flugkörpers angeordnet sind. In dem erfindungsgemäßen Verfahren folgt eine Auswertung der Druckmessungen dieser Drucksensoren. Da die Drucksensoren an unterschiedlichen Komponenten angeordnet sind, stellen diese qualitativ unterschiedliche Informationen zur Verfügung, wobei beispielsweise die Drücke, die an den Drucksensoren, die an den unterschiedlichen Komponenten angeordnet sind, in unterschiedlichem Ausmaß von den einzelnen Anströmparametern und deren Änderungen abhängig sein können.

Vorzugsweise erfolgt die Druckmessung mittels Drucksensoren, die flächenbündig angeordnet sind. Dies hat den Vorteil, dass durch eine Vermeidung von Vorsprüngen oder Vertiefungen im Bereich der Flächen eine Vermeidung einer Beeinflussung der Umströmung des Flugkörpers durch den Drucksensor erfolgt. Andererseits wird hierdurch eine überhöhte thermische Beanspruchung des Drucksensors bei der Umströmung bei einem Überschallflug oder Hyperschallflug vermieden. Schließlich kann unter Umständen auch das Drucksignal des Drucksensors durch die flächenbündige Anordnung verbessert werden, da Totbereiche, Turbulenzen oder Strömungsablösungen im Bereich des Drucksensors vermieden werden.

Die Erfindung schlägt auch vor, dass eine Druckmessung an mindestens einem an einer Finne angeordneten Drucksensor durchgeführt wird. Dieser Vorschlag umfasst auch die Durchführung von Druckmessungen an mehreren mit Drucksensoren ausgestatteten Finnen, die über den Umfang eines Grundkörpers des Überschall-Flugkörpers (gleichmäßig oder ungleichmäßig) verteilt angeordnet sind, wobei dann vorzugsweise Drucksensoren jeweils auf beiden Seiten der Finnen angeordnet sind. Um lediglich ein die Erfindung nicht beschränkendes Beispiel zu nennen, kann es sich um vier gleichmäßig entlang des Umfangs des Grundkörpers verteilt angeordnete Finnen handeln, die sich mit ihrer Haupterstreckungsebene radial und in Längsrichtung des Grundkörpers erstrecken können oder beliebig hierzu geneigt sein können. Die Finnen können an beliebiger Stelle der Längserstreckung des Grundkörpers angeordnet sein, beispielsweise im hinteren Endbereich des Grundkörpers, in einem mittigen Teilbereich des Grundkörpers oder auch in einem vorderen Endbereich des Grundkörpers, der aber hinter der Nase (und einem etwaigen Radom) des Grundkörpers angeordnet ist.

Im Rahmen der Erfindung kann die Druckmessung an einem körperfesten Drucksensor durchgeführt werden. Möglich ist dabei, dass der Drucksensor an dem Grundkörper angeordnet ist oder an einer körperfesten Finne.

Alternativ oder kumulativ möglich ist, dass eine Druckmessung an mindestens einem Drucksensor durchgeführt wird, dessen lokaler Anstellwinkel veränderbar ist, was mittels eines geeigneten Aktuators oder durch Einfluss der Umströmung erfolgt. Beispielsweise kann es sich um eine Finne handeln, deren Anstellwinkel veränderbar ist, um die Flugbedingungen, insbesondere die Flugrichtung und/oder Geschwindigkeit des Flugkörpers, zu beeinflussen. Für einen besonderen Vorschlag der Erfindung kann aber auch eine Veränderung des lokalen Anstellwinkels erfolgen, um mittels des Drucksensors unterschiedliche Druckmessungen für unterschiedliche lokale Anstellwinkel durchzuführen, so dass somit der Drucksensor multifunktional genutzt ist, indem dieser auf unterschiedliche Weisen, die von dem Anstellwinkel abhängen, angeströmt wird, womit letztendlich die Identifikation der Anströmparameter verbessert werden kann und unter Umständen auch die Genauigkeit der Identifikation der Anströmparameter erhöht werden kann.

In dem erfindungsgemäßen Verfahren werden einerseits X Druckmessungen an körperfesten Drucksensoren durchgeführt, wobei X ≥ N gilt. Aus den X Druckmessungen wird dann in dem Verfahren eine erste Schätzung für die N Anströmparameter ermittelt.

Zusätzlich werden erfindungsgemäß Y Druckmessungen an Drucksensoren durchgeführt, deren lokaler Anstellwinkel veränderbar ist, wobei beispielsweise diese Drucksensoren an einer verstellbaren Finne angeordnet sein können. In diesem Fall gilt Y ≥ N. In dem erfindungsgemäßen Verfahren wird dann aus den Y Druckmessungen eine zweite Schätzung für die N Anströmparameter ermittelt.

Es erfolgt somit mittels redundanter Drucksensoren eine redundante Ermittlung von zwei Schätzungen für die N Anströmparameter, wobei die beiden Schätzungen grundsätzlich voneinander unabhängig sind, da diese auf unterschiedlichen Drucksensoren basieren. Möglich ist dann, dass wahlweise für unterschiedliche Flugbedingungen oder Flugphasen das Ergebnis der ersten Schätzung oder der zweiten Schätzung verwendet wird. Wird für einzelne Drucksensoren detektiert, dass diese defekt sind, kann eine Bevorzugung der ersten Schätzung bzw. der zweiten Schätzung erfolgen, indem die Schätzung verwendet wird, die auf nicht fehlerhaften Drucksensoren basiert. Für einen Vorschlag der Erfindung erfolgt aus der ersten Schätzung und der zweiten Schätzung eine gemeinsame verbesserte Schätzung der N Anströmparameter, wobei im einfachsten Fall die gemeinsame Schätzung eine Mittelwertbildung aus der ersten Schätzung und der zweiten Schätzung ist. Es kann aber auch jede beliebige andere Abhängigkeit über eine funktionale Abhängigkeit oder eine Gewichtung der Anströmparameter der ersten Schätzung und der zweiten Schätzung u. ä. zum Einsatz kommen.

Möglich ist im Rahmen der Erfindung, dass die N Anströmparameter lediglich auf Grundlage der erläuterten Druckmessungen ermittelt werden. Eine Verbesserung der Bestimmung der Anströmparameter kann unter Umständen erfolgen, wenn diese Anströmparameter auch auf einer Auswertung von zusätzlichen nicht-druckbasierten Signalgebern bestimmt werden. Um lediglich einige die Erfindung nicht beschränkende Beispiele zu nennen, kann es sich bei den weiteren, nicht-druckbasierten Signalgebern um einen Global Positioning Sensor (GPS), eine inertiale Messeinheit (insbesondere Beschleunigungssensor oder Drehratensensor; "Inertial-Measurement-Unit" (abgekürzt IMU)) und/oder einen Höhenmesser (Altimeter) handeln.

Grundsätzlich gibt es, wie auch eingangs erläutert, vielfältige Möglichkeiten zur Ermittlung der Anströmparameter aus den Druckmessungen. Als besonders einfache, effiziente, einfach zu implementierende und wenig Prozessorleistung erfordernde Möglichkeit, die dennoch gute Ergebnisse liefert, hat sich die Methode der kleinsten Fehlerquadrate herausgestellt, die in dem erfindungsgemäßen Verfahren zur Ermittlung der Anströmparameter Einsatz finden kann.

Möglich ist, dass eine Iteration und/oder Interpolation bei der Ermittlung der Anströmparameter erfolgt, indem eine Optimierung eines Fehlerkriteriums unter Variation möglicher Anströmparameter und Einflussgrößen erfolgt. Für eine Ausgestaltung des erfindungsgemäßen Verfahrens wird dieses kontinuierlich oder wiederholt innerhalb vorbestimmter gleicher oder variierender Zeitabstände oder zu besonderen Ereignissen des Flugbetriebs durchgeführt. Erfolgt dann zu einem Zeitpunkt $t_2$ eine Ermittlung der N Anströmparameter, können zu einem vorangegangenen Zeitpunkt $t_1$ ermittelte Anströmparameter als Ausgangspunkt verwendet werden, womit dann über einen geeigneten Algorithmus eine Veränderung der Anströmparameter von dem Zeitpunkt $t_1$ zu dem Zeitpunkt $t_2$ ermittelt wird, womit eine schnellere Ermittlung erfolgen kann und unter Umständen auch eine schnellere und stabilere Konvergenz der Ermittlung gewährleistet werden kann.

Im Rahmen der Ermittlung der Anströmparameter kann aus den Druckwerten eine Ermittlung von normalisierten Druckbeiwerten erfolgen.

Ebenfalls möglich ist im Rahmen der Erfindung, dass die Druckmessungen bei der Ermittlung der Anströmparameter unterschiedlich gewichtet werden. Hierbei können die Druckmessungen mit einem von den Anströmparametern unabhängigen Wichtungsfaktor gewichtet werden. Ebenfalls möglich ist aber, dass die Wichtung der Druckmessungen von den Anströmparametern abhängig ist.

Wie eingangs erwähnt, kann durch das erfindungsgemäße Verfahren eine Ermittlung der Anströmparameter sowohl bei einem Vorwärtsflug als auch bei einem Rückwärtsflug des Flugkörpers erfolgen, wobei die Auswertung auf den Druckmessungen derselben Drucksensoren basieren kann.

Möglich ist, dass in dem Verfahren ergänzend auch eine Temperaturmessung durchgeführt wird. Hierzu kann ein Temperatursensor Einsatz finden, der in einen Drucksensor integriert sein kann oder benachbart zu diesem angeordnet sein kann. Einerseits stellt eine von dem Temperatursensor gemessene Temperatur einen weiteren Anströmparameter oder Betriebsgröße dar, der oder die von Interesse sein kann. Das Ergebnis der Temperaturmessung durch den Temperatursensor kann aber bspw. auch für eine Temperaturkompensation der Druckmessungen der Drucksensoren verwendet werden.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

## KURZBESCHREIBUNG DER FIGUREN

Im Folgenden wird die Erfindung anhand in den Figuren dargestellter bevorzugter Ausführungsbeispiele weiter erläutert und beschrieben.

Fig. 1    zeigt in einer räumlichen Darstellung einen als Rakete ausgebildeten Flugkörper.

Fig. 2    zeigt in einer räumlichen Darstellung ein Detail des vorderen Endbereichs der Rakete gemäß Fig. 1.

Fig. 3    zeigt in einer räumlichen Ansicht eine weitere Ausgestaltung eines als Rakete ausgebildeten Flugkörpers.

Fig. 4    zeigt eine schematische Darstellung einer Finne eines Flugkörpers, deren lokaler Anstellwinkel veränderbar ist.

Fig. 5    zeigt schematisch ein Ablaufdiagramm eines erfindungsgemäßen Verfahrens.

## FIGURENBESCHREIBUNG

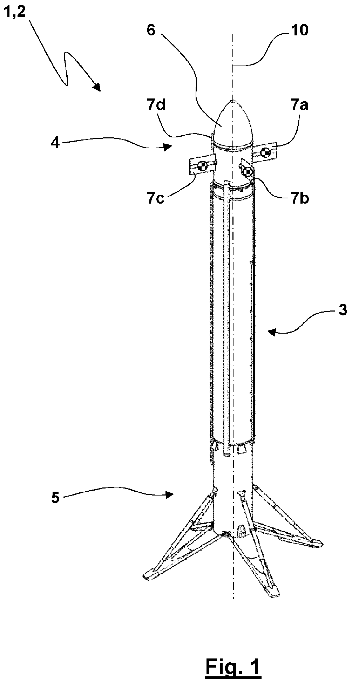

**Fig. 1** zeigt einen Überschall-Flugkörper 1 (der auch ein Hyperschall-Flugkörper sein kann), dessen Geometrie sowie Antrieb geeignet ausgebildet sind für eine Bewegung mit Überschallgeschwindigkeit oder Hyperschallgeschwindigkeit. Der Überschall-Flugkörper 1, der im Folgenden auch vereinfacht als Flugkörper 1 bezeichnet wird, ist für das dargestellte Ausführungsbeispiel als Rakete 2 ausgebildet. Die Rakete 2 verfügt über einen (stark vereinfacht beschrieben zylindrischen) Grundkörper 3 mit einem vorderen Endbereich 4 und einem hinteren Endbereich 5. In dem vorderen Endbereich 4 bildet der Grundkörper 3 eine Nase 6 aus, die in üblicher Weise einen nach vorne abnehmenden kreisförmigen Querschnitt aufweist und gewölbt ist, vorzugsweise mit einer abgerundeten Spitze. Hinter der Nase 6 erstrecken sich von dem Grundkörper 3 in dem vorderen Endbereich 4 hier gleichförmig über den Umfang verteilte Finnen 7a, 7b, 7c, 7d. Die Finnen 7 sind jeweils radial zu einer Längsachse 10 des Grundkörpers 3 orientiert mit einer Haupterstreckungsebene, die durch die radiale Orientierung sowie die Längsachse aufgespannt wird. Die Finne 7 verfügt über eine geeignete Kontur mit einer Variation der Länge und/oder Dicke über die Längserstreckung der Finne 7, die der radialen Orientierung entspricht, sowie in Richtung der Umströmung, die vorzugsweise ungefähr parallel zur Längsachse 10 des Grundkörpers 3 orientiert ist.

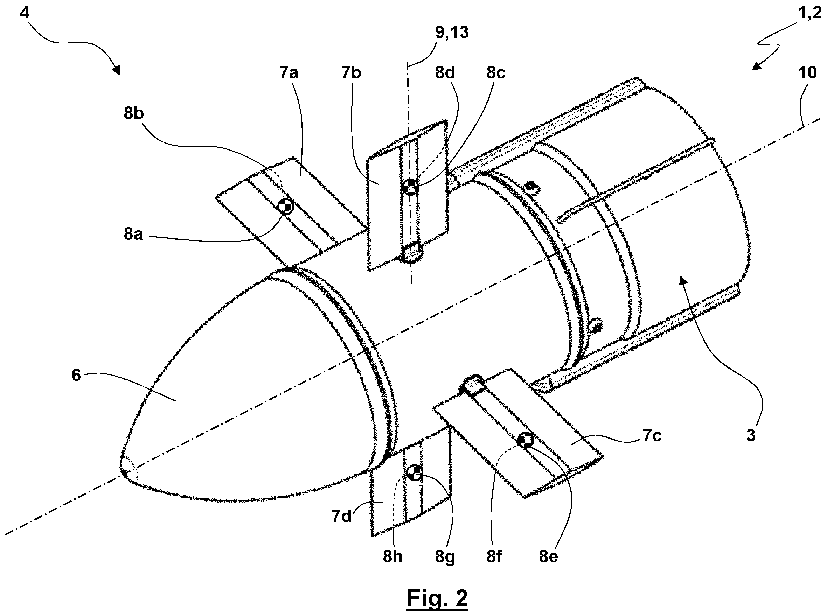

Insbesondere in der Detailansicht gemäß **Fig. 2** ist zu erkennen, dass die Finnen jeweils (hier im Bereich einer Abflachung des Querschnitts der Finnen 7) auf einander gegenüberliegenden Seiten Paare von Drucksensoren 8a, 8b; 8c, 8d; 8e, 8f; 8g, 8h aufweisen. Die Drucksensoren 8 sind jeweils ungefähr bei der Hälfte der Erstreckung der Finnen 7 (insbesondere 20 % bis 80 % der Erstreckung oder 30 % bis 70 % der Erstreckung oder 40 % bis 60 % der Erstreckung oder 45 % bis 55 % der Erstreckung) in eine Richtung parallel zur Längsachse 10 oder in Strömungsrichtung auf den gegenüberliegenden Seiten sowie bei demselben radialen Abstand von der Längsachse 10 des Grundkörpers 3 angeordnet.

Befindet sich der Flugkörper 1 in einem Vorwärtsflug, erfolgt die Umströmung des Flugkörpers 1 von dem vorderen Endbereich 4 zu dem hinteren Endbereich 5, womit auch eine vorzugsweise anliegende Umströmung der Finnen 7 vorliegt und die Druckmessung mittels der Drucksensoren 8 anströmungsabhängige Messwerte liefert. Befindet sich hingegen der Flugkörper 1 in einem Rückwärtsflug, erfolgt eine Umströmung des Flugkörpers 1 von dem hinteren Endbereich 5 zu dem vorderen Endbereich. Auch für diesen Rückwärtsflug erfolgt die vorzugsweise anliegende Umströmung der Finne 7, so dass auch für den Rückwärtsflug Druckmessungen mittels der Drucksensoren 8 möglich sind. Vorzugsweise ergeben sich bei denselben Geschwindigkeiten im Bereich der Finnen 7 und dieselben Anströmparameter (bis auf den Vorwärts- und Rückwärtsflug) dieselben Anströmbedingungen, so dass auch die Drucksensoren 8 vergleichbare Druckmessungen durchführen. In diesem Fall können die Finnen 7 hinsichtlich der Anströmung im Vorwärts- und Rückwärtsflug gleiche oder symmetrische Profilgeometrien aufweisen. Es ist aber auch möglich, dass die Finne 7 nicht symmetrische Profile aufweisen und/oder die Drucksensoren 8 für vergleichbare Anströmparameter unterschiedliche Ergebnisse der Druckmessungen für den Vorwärts- und Rückwärtsflug herbeiführen, was dann durch unterschiedliche Datensätze für den Vorwärtsflug und den Rückwärtsflug, unterschiedliche Formeln für den Vorwärtsflug und den Rückwärtsflug und/oder unterschiedliche neuronale Netze für den Vorwärtsflug und den Rückwärtsflug bei der Auswertung und Ermittlung der Strömungsparameter berücksichtigt sein kann.

Möglich ist, dass die Finnen 7 starr an dem Grundkörper 3 gehalten sind. Alternativ möglich ist aber auch, dass eine Verstellung eines lokalen Anstellwinkels 12 der Finnen 7 möglich ist, wobei eine einzelne Verstellung des lokalen Anstellwinkels einer einigen Finne 7 möglich ist oder eine gemeinsame Verstellung der lokalen Anstellwinkel der Finnen 7 um denselben oder unterschiedliche Differenzwinkel möglich ist.

Für das dargestellte Ausführungsbeispiel kann eine Verstellung des lokalen Anstellwinkels der Finnen 7 um eine Verstellachse 9 erfolgen, die der Längsachse 13 der Finnen 7 entspricht und radial zu dem Grundkörper 3 orientiert ist.

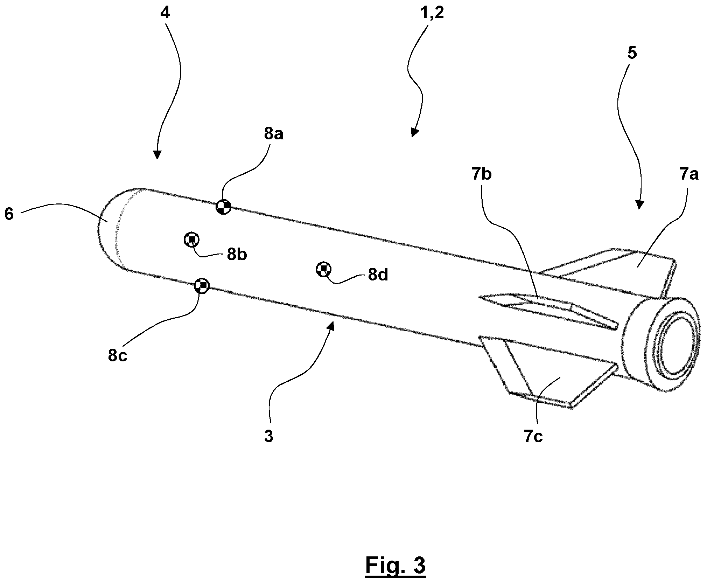

Für das in **Fig. 3** dargestellte Ausführungsbeispiel eines Flugkörpers 1 befinden sich Finnen 7 im hinteren Endbereich 5. In diesem Fall sind Drucksensoren 8 im Bereich des Grundkörpers 3 des Flugkörpers 1 angeordnet, die somit körperfest, also nicht verstellbar hinsichtlich ihrer Ausrichtung oder Beaufschlagung mit der Umströmung, sind.

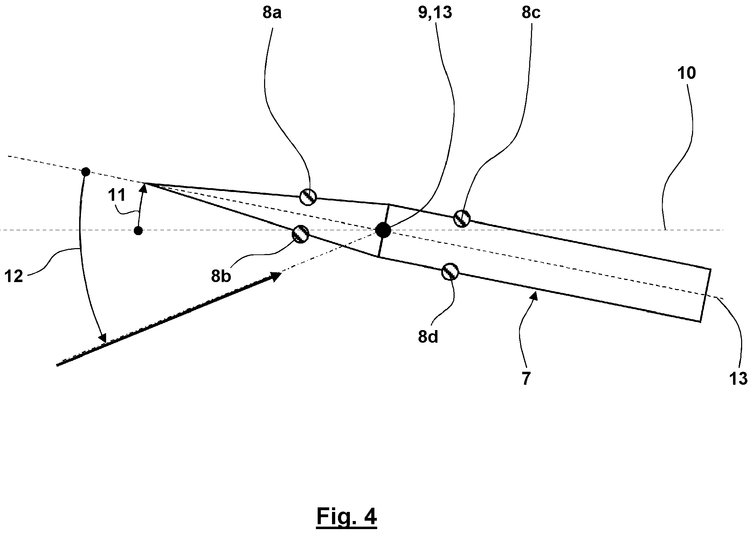

**Fig. 4** zeigt schematisch eine Finne 7 eines Flugkörpers 1, deren lokaler Verstellwinkel 11 gegenüber der Längsachse 10 des Flugkörpers 1 veränderbar ist. In Fig. 4 ist auch der lokale Anstellwinkel 12 dargestellt, der von dem globalen Anstellwinkel des Flugkörpers 1 und dem lokalen Verstellwinkel 11 abhängig ist. Hier ergibt sich der globale Anstellwinkel aus der Differenz des lokalen Anstellwinkels 12 und dem lokalen Verstellwinkel 11. Schematisch dargestellt sind hier auch die von der verstellbaren Finne 7 getragenen Drucksensoren 8, wobei hier jeweils zwei Paare von Drucksensoren 8a, 8b; 8d, 8c auf unterschiedlichen Seiten der Finne 7 angeordnet sind, hier bei derselben Erstreckung der Finne 7 in Richtung von deren Längsachse 13.

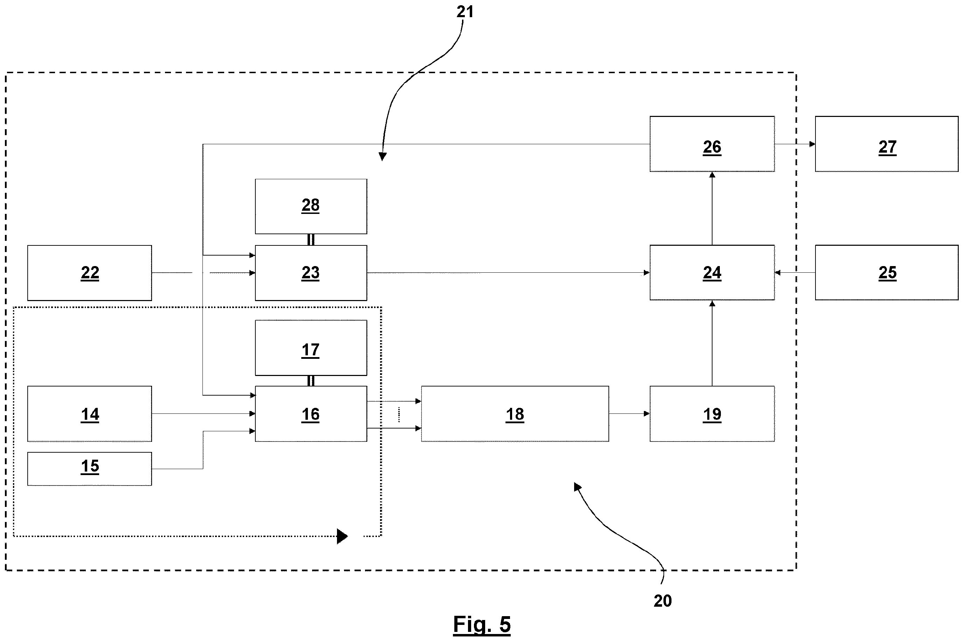

**Fig. 5** zeigt stark schematisiert ein erfindungsgemäßes Verfahren zur Ermittlung der Anströmparameter:
In einem Verfahrensschritt 14 erfolgt mittels der Y Drucksensoren 8 eine Messung der lokalen Drücke $p_y$ mit 1...y...Y an Finnen 7, die in diesem Fall mit einem lokalen Verstellwinkel 11 zu einem lokalen Anstellwinkel 12, der hier als $\delta_y$ bezeichnet wird, verstellbar sind. Die einzelnen Finnen werden dabei mit 1...f...F bezeichnet. In einem Verfahrensschritt 15, der vorzugsweise mit der Verstellung der Finnen 7 um die Verstellachse 9 zur Herbeiführung eines vorgegebenen lokalen Verstellwinkels 11 oder gleichzeitig mit der Erfassung der Drücke $p_y$ in dem Verfahrensschritt 14 ausgeführt wird, wird der lokale Anstellwinkel 12 $\delta_y$ für die Finnen 7, an denen die Drucksensoren 8 p angeordnet sind, ermittelt. Die Druckmessungen $p_y$ sowie die jeweils zugeordneten lokalen Anstellwinkel $\delta_y$ werden dann einem Verfahrensschritt 16 zugeführt, in dem eine Auswertung erfolgt. Für diese Auswertung erfolgt zunächst eine Normalisierung der Druckmessungen $p_y$ auf einen normalisierten Druckbeiwert $cp_y$, womit sich Y normalisierte gemessene Druckbeiwerte $cp_y$ ergeben. Die Auswertung in dem Verfahrensschritt 16 greift zu auf eine Datenbank 17. In der Datenbank 17 sind jeweils Vektoren von Druckbeiwerten abgespeichert in Abhängigkeit der unterschiedlichen Anströmparameter (nämlich der Machzahl M, den statischen Atmosphärendruck $p_\infty$, dem globalen Anstellwinkel $\alpha$ und dem globalen Schiebewinkel $\beta$). In der Auswertung 16 wird dann geprüft, welcher Vektor der in der Datenbank gespeicherten Soll-Druckbeiwerte $cp_{soll,y}$ dem Vektor der gemessenen (Ist-)Druckbeiwerte $cp_y$ am Nächsten kommt.

Der den Soll-Druckbeiwerte $cp_{soll,y}$ am Nächsten kommende Vektor der (Ist-)Druckbeiwerte $cp_y$ liefert mit den zugeordneten Anströmparametern M, p, $\alpha$, $\beta$ dann die Anströmparameter. Es versteht sich, dass die vorstehende Erläuterung mit der Zuordnung eines am nächsten kommenden Vektors lediglich zur Vereinfachung gewählt ist. Tatsächlich erfolgt in dem Verfahrensschritt 16 eine Auswertung durch einen Vergleich der Soll-Druckbeiwerte mit den Ist-Druckbeiwerten mittels einer mathematischen Optimierung, insbesondere unter Nutzung der Methode der kleinsten Fehlerquadrate erfolgt.

Beinhaltet die Datenbank die Soll-Druckbeiwerte nicht nur in Abhängigkeit der Machzahl M, des statischen Atmosphärendrucks $p_\infty$, des globalen Anstellwinkels $\alpha$ und des Schiebewinkels $\beta$, sondern auch von der Temperatur T, lässt sich die Auswertung in dem Verfahrensschritt 16 unter Zugriff auf die Datenbank 17 mathematisch wie folgt beschreiben:

$$\min\left\{\sum_{y=1}^{Y} w_y \cdot \left\|\frac{p_y - p_\infty}{\gamma/2 \cdot p_\infty \cdot M^2} - cp_{soll,y}(\alpha, \beta, p_\infty, M, T)\right\|\right\} \longrightarrow \alpha, \beta, p_\infty, M, T$$

Hierbei bezeichnet $w_y$ einen Wichtungsfaktor für die Bedeutung der Druckmessungen der einzelnen Drucksensoren 8. Der Soll-Druckbeiwert ist mit $cp_{soll,y}$ gekennzeichnet, während sich der normalisierte gemessene (Ist-)Druckbeiwert $cp_y$ aus dem Quotienten ergibt, in den $p_y$ die jeweilige Druckmessung durch den Drucksensor 8 bezeichnet, $p_\infty$ den statischen Atmosphärendruck bezeichnet, $\gamma$ den Isentropenexponenten bezeichnet und M die Machzahl bezeichnet. Bei $\|\ \|$ handelt es sich um die euklidische Norm, allerdings sind auch andere Normen wie die Betragsnorm oder das Abstandsquadrat möglich.

Hierbei nutzt man in einigen Fällen aus, dass an den Drucksensoren 8 die Anströmparameter verhältnismäßig unabhängig sind von dem lokalen Schiebewinkel.

Um die Größe der Datenbank zu minimieren oder den Minimalwertfindungsalgorithmus zu beschleunigen können in einigen Fällen auch Abhängigkeiten wie die des Drucks und der Temperatur vernachlässigt werden.

In einem ersten Schritt kann der lokale Anstellwinkel $\alpha_{y,\text{lokal}}$ mittels der folgenden Vereinfachung ermittelt werden:

$$\min\left\{\sum_{y=1}^{Y} w_y \cdot \left\|\frac{p_y - p_\infty}{\gamma/2 \cdot p_\infty \cdot M^2} - cp_{soll,y}\big(\alpha_{y,lokal}, p_\infty, M, T\big)\right\|\right\} \longrightarrow \alpha_{y,lokal}$$

Dabei müssen die Werte $p_\infty$, M und T vorgegeben sein. Diese können dabei aus einem vorherigen Berechnungsschritt genommen werden oder grob geschätzt werden.

Mit den ermittelten lokalen Anstellwinkeln $\alpha_{y,\text{lokal}}$ der Drucksensoren 8 kann dann in einem Verfahrensschritt 18 eine weitere Auswertung in Form einer Synthese erfolgen, bei der einerseits die lokalen Anstellwinkel $\alpha_{y,\text{lokal}}$ der Drucksensoren 8 und die Winkel $\varphi$, unter denen die Drucksensoren 8 relativ zueinander angeordnet sind, berücksichtigt werden:

$$\min\left\{\sum_{y=1}^{Y} w_y \cdot \left\|\cos\varphi_{jy} \cdot \sin\alpha + \sin\varphi_y \cdot \sin\beta - \sin(\alpha_{y,lokal} - \delta_y)\right\|\right\} \longrightarrow \alpha, \beta$$

Hierbei bezeichnet $\delta_y$ den in dem Verfahrensschritt 15 ermittelten lokalen Anstellwinkel 12. Mit den so ermittelten Strömungswinkel (globaler Anstellwinkel $\alpha$ und globaler Schiebewinkel $\beta$) kann dann ebenfalls durch eine Datenbanksuche für einzelnen Drucksensoren eine Ermittlung der verbleibenden Anströmparameter M, p, T erfolgen. Dabei bekommt man für jeden einzelnen Drucksensor einen eigenen Satz von Anströmparametern:

$$\longrightarrow p_\infty, M, T$$

Diese Auswertung erfolgt in einem Verfahrensschritt 19. Die lokalen Anströmwinkel können dabei über die folgende Formel bestimmt werden:

$$\alpha_{y,lokal} = \sin^{-1}\big(\cos\varphi_y \cdot \sin\alpha + \sin\varphi_y \cdot \sin\beta\big).$$

Die vorgenannten Verfahrensschritte 14, 15, 16, 18, 19, die zu einer ersten Schätzung der Anströmparameter $M_f$, $p_f$, $T_f$, $\alpha_f$, $\beta_f$ für jede einzelne Finne 1...f...F führen, werden in einem ersten Verfahrenszweig 20 für alle Finnen ausgeführt. Möglich ist, dass ausschließlich eine derartige Auswertung zur Ermittlung der Anströmparameter erfolgt.

Gemäß Fig. 5 ist ein weiterer Verfahrenszweig 21 vorhanden. In dem Verfahrenszweig 21 erfolgt unter Verwendung von X Drucksensoren mit vergleichbaren Verfahrensschritten 22, 23 unter Zugriff auf eine Datenbank 28 eine Ermittlung einer zweiten Schätzung von Anströmparametern $M_0$, $p_0$, $T_0$, $\alpha_0$, $\beta_0$, wobei in diesem Fall der Auswertung X Druckmessungen in dem Verfahrensschritt 22 zugrunde liegen, die mittels X Drucksensoren 8 vorgenommen werden, die körperfest an dem Flugkörper 1 angeordnet sind, so dass deren Orientierung zu dem Grundkörper 3 des Flugkörpers 1 fest vorgegeben ist und keine Veränderung des lokalen Verstellwinkels 11 und des lokalen Anstellwinkels 12 möglich ist. In diesem Fall kann die Auswertung vereinfacht werden, da eine Berücksichtigung eines lokalen Verstellwinkels $\delta$ nicht erforderlich ist.

In einem Verfahrensschritt 24 erfolgt dann eine Synthese der Strömungsparameter M, p, T, $\alpha$ und $\beta$ für die einzelnen Finnen aus Verfahrensschritt 20 und den Strömungsparametern aus den körperfesten Messungen über Verfahrensschritt 22. Hierbei wird über eine gewichtete Mittelung entsprechend der folgenden Gleichung ein globaler Satz an gemittelten Strömungsparametern ermittelt.

$$\bar{E} = \frac{\sum_{i=0}^{F} w_{E,i} \cdot E_i}{\sum_{i=0}^{F} w_{E,i}} \qquad \text{mit } E \in (M, p_\infty, T, \alpha, \beta)$$

Hierbei ist $w_{E,i}$ ein Satz an Gewichtungsfaktoren für die einzelnen Strömungsgrößen und Messelemente (Körperfeste Analyse und Finnen).

Das Ergebnis 26 in Form der gemittelten Strömungsparameter kann dann einerseits ausgegeben werden an eine Steuereinheit 27, bei der es sich um eine Steuereinheit des Flugkörpers 1 und/oder eine externe Steuereinheit, die in einem weiteren Flugkörper oder in einer Bodenstation angeordnet sein kann, handeln. Mittels der Steuereinheit 27 kann eine Steuerung des Flugs des Flugkörpers 1 erfolgen.

Andererseits wird das Ergebnis 26 auch wieder den Verfahrenszweigen 20, 21 zugeführt, so dass die Anströmparameter des Ergebnisses 26 für die nächste Ermittlung der Anströmparameter als Start- oder Referenzgröße verwendet werden können.

Die erfindungsgemäße Ausgestaltung nutzt insbesondere die folgenden Merkmale und hieraus resultierenden Vorteile:

Sind die eingesetzten Drucksensoren 8 oberflächenbündig angeordnet, werden diese nicht "in die Strömung gehalten", so dass diese die Umströmung des Flugkörpers 1 nicht beeinflussen, nicht zu einem höheren Strömungswiderstand führen und keine negative Beeinflussung der Aerodynamik vornehmen, wie dieses beispielsweise bei Vane-Sensoren, Anemometern, Booms oder "Multi-Hole-Pressure-Probes" der Fall ist. Es kommt auch nicht zu einer hohen thermischen Belastung bei hohen Geschwindigkeiten. Des Weiteren ergibt sich keine Anfälligkeit bei der oberflächenbündigen Anordnung gegenüber mechanischen Deformationen, wie diese beispielsweise durch ein Verbiegen während der Wartung auftreten können. Schließlich ergibt sich keine höhere Radarrückstrahlung, die negativ ist bei militärischen Flugkörpern.

Bei den Signalgebern 25, die nicht druck-basiert arbeiten, aber dennoch für eine Auswertung zur Ermittlung der Anströmparameter verwendet werden können, kann es sich neben Temperatursensoren auch um einen Sensor handeln, der einen Wärmefluss misst.

Für das erfindungsgemäße Verfahren erfolgen die Druckmessungen nicht konzentriert an einem Ort des Flugkörpers 1, wie dies bei einem klassischen FADS, eine Mehrlochsonde oder einem Anemometerstab der Fall ist. Vielmehr sind die Druckmessungen über den gesamten Flugkörper 1 oder einen Teilbereich desselben verteilt, wobei spezifische Eigenschaften von Teilbereichen des Flugkörpers (insbesondere hervorstehende Finnen oder Flügel) genutzt werden können.

Eine Auswertung erfolgt hierbei nicht lediglich, um einen lokalen Anstellwinkel eines Flügels zu ermitteln. Vielmehr werden die Anströmparameter in Form der Umströmungsbedingungen für das gesamte Flugzeug ermittelt.

Es handelt sich nicht zwingend um Staupunktmessungen, wobei bei Anordnung der Drucksensoren abseits der Nase eine Interferenz mit anderen Systemen, die zwingend im Nasenbereich anzuordnen sind, vermieden ist (beispielsweise Radar, Triebwerke, Nutzlasten, Kühlsysteme, ...).

Möglich ist, dass die Auswertung unabhängig von externen Systemen oder Signalen (GPS) erfolgt.

Durch eine (nahezu beliebige) Erhöhung der Zahl der Drucksensoren sowie eines Fail-Save/Save-Fail-Algorithmus kann das System gegen Ausfall geschützt werden. Weiterhin besteht die Möglichkeit, andere Signalgeber oder Flugzustandsinformationen in die Auswertung mit einzubeziehen.

Neben den globalen Strömungsbedingungen können weitere Informationen wie beispielsweise lokale Anstellwinkel von Steuerelementen oder Finnen 7 ermittelt werden, die dann zur Flugregelung und Flugzustandsüberwachung verwendet werden können. Beispielsweise kann so eine gezielte Detektion eines Strömungsabrisses an einer Finne 7 oder im Umgebungsbereich des Drucksensors 8 erfolgen.

Vorzugsweise ist die Rakete 2 eine rückkehrende Erststufe eines orbitalen Trägersystems.

Die in dem erfindungsgemäßen Verfahren eingesetzten Datenbanken 17, 28 werden befüllt mit Daten, die mittels einer numerischen Simulation, anhand von Windkanalversuchen oder anhand eines Echtbetriebs des Flugkörpers 1 ermittelt worden sind.

Abweichend von der dargestellten Auswertung kann eine Ermittlung des Vektors der Anströmparameter über ein neuronales Netzwerk erfolgen. Vorzugsweise finden für den Vorwärts- und Rückwärtsflug unterschiedliche Kennlinien, neuronale Netzwerke oder Datenbanken oder Bereiche der Datenbank Rechnung, die der Umkehrung der Strömungsrichtung Rechnung tragen.

Eine Ermittlung der Orte, an denen eine Anordnung der Drucksensoren 8 zu einer hohen Präzision der ermittelten Vektoren der Anströmparameter führt, kann durch Versuche oder mittels einer Simulation erfolgen.

Die Orte, an denen die Drucksensoren 8 angeordnet sind, sind vorzugsweise außerhalb eines Ablösungsgebiets, sowie im Übergangsbereich von einer anliegenden und abgelösten Strömung, und/oder außerhalb von Verschattungsgebieten oder Totbereichen gewählt. Durch eine Verwendung einer größeren Zahl von Drucksensoren kann eine Redundanz geschaffen werden.

Bei den mit dem erfindungsgemäßen Verfahren ermittelten Anströmparametern handelt es sich vorzugweise um globale Strömungsparameter.

Bei den Anströmparametern kann es sich um unabhängige Strömungsparameter der freien Anströmung handeln, wobei N>=2 gelten kann.

Das erfindungsgemäße Verfahren ist vorzugsweise ein Schätzverfahren oder Abschätzverfahren.

**BEZUGSZEICHENLISTE**

1 (Überschall-) Flugkörper
2 Rakete
3 Grundkörper
4 vorderer Endbereich
5 hinterer Endbereich
6 Nase
7 Finne
8 Drucksensor
9 Verstellachse
10 Längsachse Grundkörper
11 lokaler Verstellwinkel
12 Lokaler Anstellwinkel
13 Längsachse Finne
14 Verfahrensschritt
15 Verfahrensschritt
16 Verfahrensschritt
17 Datenbank
18 Verfahrensschritt
19 Verfahrensschritt
20 Verfahrenszweig
21 Verfahrenszweig
22 Verfahrensschritt
23 Verfahrensschritt
24 Verfahrensschritt
25 Signalgeber
26 Ergebnis
27 Steuereinheit
28 Datenbank

**Patentansprüche**

1. Verfahren zur Bestimmung von N Anströmparametern eines Überschall-Flugkörpers (1), wobei

a) als mindestens ein Anströmparameter eine Machzahl, ein Druck, ein Anstellwinkel und/oder ein Schiebewinkel des Überschall-Flugkörpers (1) bestimmt wird,
b) M Drucksensoren (8) vorhanden sind, mit welchen M Druckmessungen durchgeführt werden, wobei

ba) die Drucksensoren (8) abseits einer Nase (6) oder vorderen Stirnseite des Überschall-Flugkörpers (1) angeordnet sind,
bb) die Drucksensoren (8) unterschiedliche Flächennormalen besitzen und
bc) für die Zahl der Drucksensoren (8) und Druckmessungen $M \geq 2\,N$ gilt, und

c) unter Berücksichtigung der M Druckmessungen unter Verwendung

ca) einer Datenbank (17; 28) und/oder
cb) einer Formel und/oder
cc) eines neuronalen Netzwerkes
die N Anströmparameter ermittelt werden,

wobei
d) von den M Druckmessungen X Druckmessungen an körperfesten Drucksensoren (8) durchgeführt werden, wobei $X \geq N$ gilt, und aus den X Druckmessungen eine erste Schätzung für die N Anströmparameter ermittelt wird, und
e) von den M Druckmessungen Y Druckmessungen an Drucksensoren (8) durchgeführt werden, deren lokaler Anstellwinkel (12) veränderbar ist, wobei $Y \geq N$ gilt, und aus den Y Druckmessungen eine zweite Schätzung für die N Anströmparameter ermittelt wird, und
f) aus der ersten Schätzung und der zweiten Schätzung eine gemeinsame Schätzung für die N Anströmparameter ermittelt wird.

**2.** Verfahren nach Anspruch 1, **dadurch gekennzeichnet, dass** Drucksensoren (8) an unterschiedlichen Komponenten des Überschall-Flugkörpers (1) angeordnet sind.

**3.** Verfahren nach Anspruch 1 oder 2, **dadurch gekennzeichnet, dass** eine Druckmessung an einem flächenbündig angeordneten Drucksensor (8) durchgeführt wird.

**4.** Verfahren nach einem der vorhergehenden Ansprüche, **dadurch gekennzeichnet, dass** eine Druckmessung an einem an einer Finne (7) angeordneten Drucksensor (8) durchgeführt wird.

**5.** Verfahren nach Anspruch 3, **dadurch gekennzeichnet, dass** Druckmessungen an mehreren mit Drucksensoren (8) ausgestatteten Finnen (7), die über den Umfang eines Grundkörpers (3) des Überschall-Flugkörpers (1) verteilt angeordnet sind, durchgeführt werden.

**6.** Verfahren nach Anspruch 4 oder 5, **dadurch gekennzeichnet, dass** mindestens eine Finne (7) über einen veränderbaren lokalen Anstellwinkel (12) verfügt.

**7.** Verfahren nach einem der vorhergehenden Ansprüche, **dadurch gekennzeichnet, dass** zur Ermittlung der Anströmparameter auch eine Auswertung von nicht-druckbasierten Signalgebern (25) erfolgt.

**8.** Verfahren nach einem der vorhergehenden Ansprüche, **dadurch gekennzeichnet, dass** eine Ermittlung von Anströmparametern unter Verwendung der Methode der kleinsten Fehlerquadrate erfolgt.

**9.** Verfahren nach einem der vorhergehenden Ansprüche, **dadurch gekennzeichnet, dass** das Verfahren kontinuierlich oder wiederholt durchgeführt wird und für eine Ermittlung der Anströmparameter zu einem Zeitpunkt $t_2$ zuvor zu einem Zeitpunkt $t_1$ ermittelte Anströmparameter verwendet werden.

**10.** Verfahren nach einem der vorhergehenden Ansprüche, **dadurch gekennzeichnet, dass** aus den Druckmessungen normalisierte Druckbeiwerte ermittelt werden.

**11.** Verfahren nach einem der vorhergehenden Ansprüche, **dadurch gekennzeichnet, dass** die Druckmessungen bei der Ermittlung der Anströmparameter unterschiedlich gewichtet werden.

**12.** Verfahren nach einem der vorhergehenden Ansprüche, **dadurch gekennzeichnet, dass** die Anströmparameter sowohl bei einem Vorwärtsflug als auch bei einem Rückwärtsflug eines Überschall-Flugkörpers unter Verwendung derselben Drucksensoren (8) ermittelt werden.

**13.** Verfahren nach einem der vorhergehenden Ansprüche, **dadurch gekennzeichnet, dass** auch mindestens eine Temperaturmessung durchgeführt wird mit einem Temperatursensor, der in einen Drucksensor (8) integriert oder benachbart zu diesem angeordnet ist.

**Claims**

**1.** Method for determining N flow parameters of a supersonic flying body (1) wherein

a) as at least one flow parameter a Mach number, a pressure, an angle of attack and/or an angle of yaw of the supersonic flying body (1) is determined,
b) M pressure sensors (8) are provided by which M pressure measurements are made, wherein

ba) the pressure sensors (8) are arranged remote from a nose (6) or a front face of the supersonic flying body (1),
bb) the pressure sensors (8) comprise different surface normals and
bc) for the number of pressure sensors (8) and pressure measurements $M \geq 2\,N$ applies and

c) under consideration of the M pressure measurements with the use of

ca) a database (17; 28) and/or
cb) a formula and/or
cc) a neuronal network
the N flow parameters are determined,

wherein

d) of the M pressure measurements X pressure measurements are made by pressure sensors (8) fixed to the body, wherein $X \geq N$ applies, and from the X pressure measurements a first estimate of the N flow parameters is determined and

e) of the M pressure measurements Y pressure measurements are made by pressure sensors (8) having an adjustable local angel of attack (12) wherein $Y \geq N$ applies, and from the Y pressure measurements a second estimate of the N flow parameters is determined and

f) from the first estimate and the second estimate a common estimate of the N flow parameters is determined.

2. Method of claim 1, **characterized in that** pressure sensors (8) are arranged at different components of the supersonic flying body (1).

3. Method of claim 1 or 2, **characterized in that** a pressure measurement is made at a pressure sensor (8) which is arranged flush with the adjacent area.

4. Method of one of the preceding claims, **characterized in that** a pressure measurement is made by a pressure sensor (8) arranged at a fin (7).

5. Method of claim 3, **characterized in that** pressure measurements are made at a plurality of fins (7) equipped with pressure sensors (8), the plurality of fins being distributed over the circumference of a base body (3) of the supersonic flying body (1).

6. Method of claim 4 or 5, **characterized in that** at least one fin (7) comprises an adjustable local angle of attack (12).

7. Method of one of the preceding claims, **characterized in that** for determining the flow parameters also non-pressure-based signal transmitters (25) are processed.

8. Method of one of the preceding claims, **characterized in that** flow parameters are determined by use of the least-square method.

9. Method of one of the preceding claims, **characterized in that** the method is executed continuously or is repeatedly and for a determination of the flow parameters at a point in time $t_2$ flow parameters are used which have been determined previously at a point in time $t_1$.

10. Method of one of the preceding claims, **characterized in that** normalized pressure coefficients are determined from the pressure measurements.

11. Method of one of the preceding claims, **characterized in that** the pressure measurements are weighted differently when determining the flow parameters.

12. Method of one of the preceding claims, **characterized in that** the flow parameters are determined with the use of the same pressure sensors (8) both during a forward flight as well as during a backward flight of a supersonic flying body.

13. Method of one of the preceding claims, **characterized in that** also at least one temperature measurement is made by a temperature sensor which is integrated into a pressure sensor (8) or arranged adjacent to the pressure sensor (8).

**Revendications**

1. Procédé de détermination de N paramètres d'écoulement d'un missile supersonique (1), dans lequel

a) en tant qu'au moins un paramètre d'écoulement, un nombre de Mach, une pression, un angle d'attaque et/ou un angle de poussée du missile supersonique (1) est déterminé,

b) M capteurs de pression (8) sont présents, avec lesquels M mesures de pression sont effectuées, dans lequel

ba) les capteurs de pression (8) sont disposés de chaque côté d'un nez (6) ou d'une face frontale avant du missile supersonique (1),

bb) les capteurs de pression (8) présentent différentes normales de surfaces et

bc) pour le nombre de capteurs de pression (8) et de mesures de pression : M ≥ 2 et

c) en tenant compte des M mesures de pression, à l'aide

ca) d'une base de données (17 ; 28) et/ou

cb) d'une formule et/ou

cc) d'un réseau neuronal,

les N paramètres d'écoulement sont déterminés,

dans lequel

d) parmi les M mesures de pression, X mesures de pression sont effectuées au niveau de capteurs de pression (8) solidaires du corps, dans lequel X ≥ N et, à partir des X mesures de pression, une première évaluation des N paramètres d'écoulement est déterminée et

e) parmi les M mesures de pression, Y mesures de pression sont effectuées au niveau de capteurs de pression (8) dont l'angle d'attaque local (12) est variable, dans lequel Y ≥ N et, à partir des Y mesures de pression, une deuxième évaluation des N paramètres d'écoulement est déterminée et

f) à partir de la première évaluation et de la deuxième évaluation, une évaluation commune des N paramètres d'écoulement est déterminée.

2. Procédé selon la revendication 1, **caractérisé en ce que** les capteurs de pression (8) sont disposés sur différents composants du missile supersonique (1).

3. Procédé selon la revendication 1 ou 2, **caractérisé en ce qu'**une mesure de pression est effectuée au niveau d'un capteur de pression (8) disposé de manière affleurante à la surface.

4. Procédé selon l'une des revendications précédentes, **caractérisé en ce qu'**une mesure de pression est effectuée au niveau d'un capteur de pression (8) disposé sur un aileron (7).

5. Procédé selon la revendication 3, **caractérisé en ce que** des mesures de pression sont effectuées au niveau de plusieurs ailerons (7) équipés de capteurs de pression (8), qui sont répartis sur la périphérie d'un corps de base (3) du missile supersonique (1).

6. Procédé selon la revendication 4 ou 5, **caractérisé en ce qu'**au moins un aileron (7) présente un angle d'attaque local variable (12).

7. Procédé selon l'une des revendications précédentes, **caractérisé en ce que**, pour la détermination des paramètres d'écoulement, une analyse de générateurs de signaux non basés sur la pression (25) est également effectuée.

8. Procédé selon l'une des revendications précédentes, **caractérisé en ce qu'**une détermination de paramètres d'écoulement est effectuée à l'aide de la méthode des moindres carrés d'erreurs.

9. Procédé selon l'une des revendications précédentes, **caractérisé en ce que** le procédé est exécuté de manière continue ou répétitive et, pour une détermination des paramètres d'écoulement à un moment $t_2$, les paramètres d'écoulement déterminés précédemment à un moment $t_1$ sont utilisés.

10. Procédé selon l'une des revendications précédentes, **caractérisé en ce que**, à partir des mesures de pression, des coefficients de pression normalisés sont déterminés.

11. Procédé selon l'une des revendications précédentes, **caractérisé en ce que** les mesures de pression sont pondérées différemment lors de la détermination des paramètres d'écoulement.

12. Procédé selon l'une des revendications précédentes, **caractérisé en ce que** les paramètres d'écoulement sont déterminés aussi bien lors d'un vol vers l'avant que lors d'un vol vers l'arrière d'un missile supersonique à l'aide des mêmes capteurs de pression (8).

**13.** Procédé selon l'une des revendications précédentes, **caractérisé en ce qu'**au moins une mesure de température est effectuée avec un capteur de température qui est intégré dans un capteur de pression (8) ou qui est disposé près de celui-ci.

**Fig. 1**

EP 4 227 689 B1

**Fig. 2**

**Fig. 3**

EP 4 227 689 B1

**Fig. 4**

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8930062 B2
- US 7070144 B1
- DE 102012104366 A1
- US 20120091266 A1
- US 20160161524 A1
- US 2020183423 A1
- US 2021072281 A1
- US 2016356175 A1
- DE 60022396 T2

**In der Beschreibung aufgeführte Nicht-Patentliteratur**

- **WOOD, K. T. et al.** Distributed Pressure Sensing-Based Flight Control for Small Fixed-Wing Unmanned Aerial Systems. *Journal of Aircraft,* September 2019, vol. 56 (5), 1951-1960, https://arc.aiaa.org/doi/pdf/10.2514/1.C035416
- **P. J. HERMANN et al.** Airfoil Probe for Angle-of-Attack Measurement. *Journal of Aircraft 21.1,* Januar 1984, 87-89, https://arc.aiaa.org/doi/10.2514/3.48228
- **WHITMORE, S. et al.** Application of a Flush Airdata Sensing System to a Wing Leading Edge (LE-FADS). *31 st Aerospace Sciences Meeting & Exhibit,* Januar 1993, 11-14, https://arc.aiaa.org/doi/pdf/10.2514/6.1993-634
- **WHITMORE, S. et al.** In-Flight Demonstration of a Real-Time Flush Airdata Sensing (RT-FADS) System. *NASA Technical Memorandum,* 1995, 104314, https://www.nasa.gov/centers/drydem/pdf/88381main_H-2053.pdf
- **GIAGKOZOGLOU VINCENZINO, S. et al.** Reusable Structures for CALLISTO. *8th European Conference for Aeronautics and Space Sciences (EUCASS),* 01. Juli 2019
- A comprehensive survey on the methods of angle of attack measurement and estimation in UAVs. **SANKARALINGAM L et al.** CHINESE JOURNAL OF AERONAUTICS. ELSEVIER, 18. November 2019, vol. 33